# EUROPEAN PATENT APPLICATION

(11) **EP 4 296 800 A1**
(43) Date of publication of application: **27.12.2023**
(21) Application number: 23177968.7
(22) Date of filing: 07.06.2023
(51) Int. Cl.: G05B 13/02, G05B 23/02

(54) **ESTIMATION APPARATUS, ESTIMATION METHOD, AND ESTIMATION PROGRAM**

(30) Priority: 21.06.2022 JP 2022099380
(71) Applicant: Yokogawa Electric Corporation, Musashino-shi, Tokyo 180-8750 (JP)
(72) Inventor: TAKAMI, Go, Musashino-shi, Tokyo, 180-8750 (JP); OKAMOTO, Hiromi, Musashino-shi, Tokyo, 180-8750 (JP); SATO, Masahiko, Musashino-shi, Tokyo, 180-8750 (JP); FUJII, Hideyuki, Musashino-shi, Tokyo, 180-8750 (JP); JINGUU, Yoshiyuki, Musashino-shi, Tokyo, 180-8750 (JP); MITOMO, Nobuhiro, Musashino-shi, Tokyo, 180-8750 (JP)
(74) Representative: Winter, Brandl - Partnerschaft mbB

(57) **Abstract**

[Abstract][Means for solving the problem] There is provided an estimation apparatus including an abnormality index acquisition unit configured to acquire, as an abnormality index, an evaluation index which is output by an evaluation model according to state data being input when an abnormality occurs in a facility, among pieces of the state data indicating a state of the facility when an operation model is used to control a control target provided in the facility, the operation model being generated by reinforcement learning in which an output of the evaluation model trained by machine learning to output the evaluation index in accordance with the state of the facility, is set as at least a part of a reward, and outputting an action in accordance with the state of the facility; an estimation unit configured to estimate which of the evaluation model or the operation model is a main cause of the abnormality, based on the abnormality index; and an output unit configured to execute an output in accordance with a result of the estimate.

## Description

### BACKGROUND

### 1. TECHNICAL FIELD

The present invention relates to an estimation apparatus, an estimation method, and an estimation program.

### 2. RELATED ART

Patent Document 1 discloses that "the model 45 outputs a recommended control parameter indicating the first type of control content recommended for increasing the reward value in response to input of the measurement data". In addition, Non-Patent Document 1 discloses "FKDPP (Factorial Kernel Dynamic Policy Programming)".

### [Prior Art Document]

### [Patent Document]

[Patent Document 1] Japanese Patent Application Publication No. 2021-086283

### [Non-Patent Document]

[Non-Patent Document 1] "Yokogawa Electric and NAIST for Reinforcement Learning for Chemical Plants", Nikkei Robotics, March 2019

### SUMMARY

A first aspect of the present invention provides an estimation apparatus. The estimation apparatus includes an abnormality index acquisition unit configured to acquire, as an abnormality index, an evaluation index which is output by an evaluation model according to state data being input when an abnormality occurs in a facility, among pieces of the state data indicating a state of the facility when an operation model is used to control a control target provided in the facility, the operation model being generated by reinforcement learning in which an output of the evaluation model trained by machine learning to output the evaluation index in accordance with the state of the facility, is set as at least a part of a reward, and outputting an action in accordance with the state of the facility; an estimation unit configured to estimate which of the evaluation model or the operation model is a main cause of the abnormality, based on the abnormality index; and an output unit configured to execute an output in accordance with a result of the estimate.

In the estimation apparatus, the estimation unit may be configured to estimate that the main cause of the abnormality is the operation model, when the abnormality index does not satisfy a predetermined criterion.

In any of the estimation apparatuses, the output unit may be configured to output a message of an instruction to train the operation model by relearning, when the main cause of the abnormality is estimated to be the operation model.

In any of the estimation apparatuses, the estimation unit may be configured to estimate that the main cause of the abnormality is the evaluation model, when the abnormality index satisfies a predetermined criterion.

In any of the estimation apparatuses, the output unit may be configured to output a message of an instruction to train the evaluation model by relearning, when the main cause of the abnormality is estimated to be the evaluation model.

In the estimation apparatus, the output unit may be configured to output, in a case where the message of the instruction to train the evaluation model by the relearning is output, a message of an instruction to train the operation model by relearning in which an output of the evaluation model trained by the relearning is set as at least a part of the reward.

Any of the estimation apparatuses may further include a state data acquisition unit configured to acquire the state data.

Any of the estimation apparatuses may further include an abnormality detection unit configured to detect that an abnormality has occurred in the facility, based on the state data.

Any of the estimation apparatuses may further include a control unit configured to control the control target by using the operation model.

Any of the estimation apparatuses may further include an operation model generation unit configured to generate the operation model by reinforcement learning.

Any of the estimation apparatuses may further include an evaluation model generation unit configured to generate the evaluation model by machine learning.

A second aspect of the present invention provides an estimation method. The estimation method is executed by a computer, and the estimation method includes: by the computer, acquiring, as an abnormality index, an evaluation index which is output by an evaluation model according to state data being input when an abnormality occurs in a facility, among pieces of the state data indicating a state of the facility when an operation model is used to control a control target provided in the facility, the operation model being generated by reinforcement learning in which an output of the evaluation model trained by machine learning to output the evaluation index in accordance with the state of the facility, is set as at least a part of a reward, and outputting an action in accordance with the state of the facility; estimating which of the evaluation model or the operation model is a main cause of the abnormality, based on the abnormality index; and executing an output in accordance with a result of the estimating.

A third aspect of the present invention provides an estimation program. The estimation program is executed by a computer and causes the computer to function as: an abnormality index acquisition unit configured to acquire, as an abnormality index, an evaluation index which is output by an evaluation model according to state data being input when an abnormality occurs in a facility, among pieces of the state data indicating a state of the facility when an operation model is used to control a control target provided in the facility, the operation model being generated by reinforcement learning in which an output of the evaluation model trained by machine learning to output the evaluation index in accordance with the state of the facility, is set as at least a part of a reward, and outputting an action in accordance with the state of the facility; an estimation unit configured to estimate which of the evaluation model or the operation model is a main cause of the abnormality, based on the abnormality index; and an output unit configured to execute an output in accordance with a result of the estimate.

The summary clause does not necessarily describe all necessary features of the embodiments of the present invention. In addition, the present invention may also be a sub-combination of the features described above.

### BRIEF DESCRIPTION OF THE DRAWINGS

Fig. 1 shows an example of a block diagram of a control system 1.
Fig. 2 shows an example of a block diagram of an evaluation model management apparatus 200.
Fig. 3 shows an example of a block diagram of an operation model management apparatus 300.
Fig. 4 shows an example of a block diagram of an estimation apparatus 400 according to the present embodiment.
Fig. 5 shows an example of a block diagram of a control apparatus 500.
Fig. 6 shows an example of a flow diagram of an estimation method that may be executed by the estimation apparatus 400 according to the present embodiment.
Fig. 7 shows an example of a block diagram of the estimation apparatus 400 according to a first modification example.
Fig. 8 shows an example of a block diagram of the estimation apparatus 400 according to a second modification example.
Fig. 9 shows an example of a block diagram of the estimation apparatus 400 according to a third modification example.
Fig. 10 shows an example of a block diagram of the estimation apparatus 400 according to a fourth modification example.
Fig. 11 shows an example of a computer 9900 in which a plurality of aspects of the present invention may be entirely or partially embodied.

### DESCRIPTION OF EXEMPLARY EMBODIMENTS

Hereinafter, embodiments of the present invention will be described, but the embodiments do not limit the invention according to the claims. In addition, not all of the combinations of features described in the embodiments are essential for solving means of the invention.

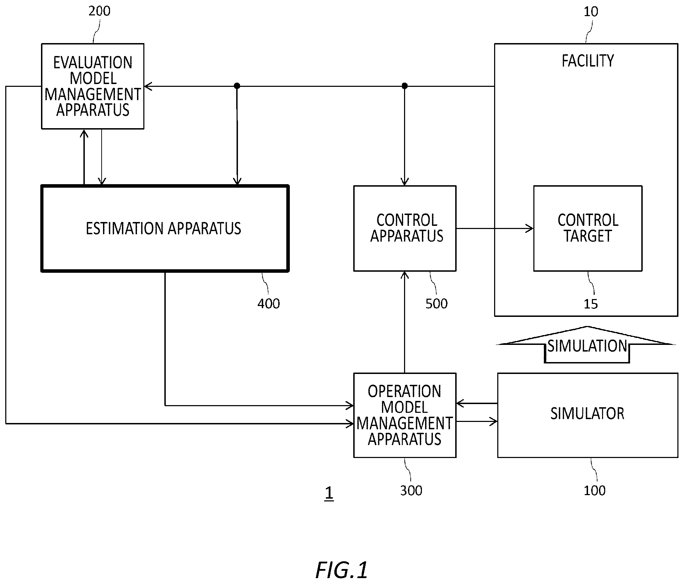

Fig. 1 shows an example of a block diagram of a control system 1. It should be noted that these blocks are functional blocks that are functionally separated from each other, and may not be necessarily required to be matched with actual apparatus configurations. That is, in the present drawing, an apparatus indicated by one block may not be necessarily required to be configured by one apparatus. In addition, in the present drawing, apparatuses indicated by separate blocks may not be necessarily required to be configured by separate apparatuses. Block diagrams described below will be similar.

In the control system 1, an evaluation model that outputs an evaluation index in accordance with a state of a facility 10, and generates an operation model by reinforcement learning in which an output of the evaluation model is set as at least a part of a reward is generated by machine learning. Then, in the control system 1, a control target 15 in the facility 10 is controlled by using the generated operation model. A control using such an operation model is also referred to as an AI (Artificial Intelligence) control. In the control system 1 that uses, in this way, a plurality of machine learning models, which are different from each other, such as the evaluation model and the operation model, when an abnormality occurs in the facility 10, an estimation apparatus 400 according to the present embodiment estimates whether a main cause of the abnormality is the evaluation model or the operation model.

The control system 1 may include the facility 10, a simulator 100, an evaluation model management apparatus 200, an operation model management apparatus 300, the estimation apparatus 400, and a control apparatus 500.

The facility 10 is a facility or an apparatus in which the control target 15 is provided. For example, the facility 10 may be a plant, or may be a complex apparatus in which a plurality of pieces of equipment are combined. Examples of the plant include: in addition to an industrial plant such as a chemical plant and a biotechnology plant, a plant for managing and controlling a well site such as a gas field or an oil field and its surrounding area; a plant for managing and controlling power generation such as hydroelectric, thermal, or nuclear power generation; a plant for managing and controlling energy harvesting from solar power, wind power, or the like; a plant for managing and controlling water and sewerage, dams, or the like; and others.

As an example, a case where the facility 10 is a distillation apparatus that is one of process apparatuses will be described below. Typically, the distillation apparatus evaporates a low-boiling component in a distillation column to extract the evaporated low-boiling component from a top of the column, and condenses vapor of the extracted low-boiling component by a condenser to store the condensed vapor in a reflux drum. Then, the distillation apparatus refluxes a part of the vapor of the extracted low-boiling component stored in the reflux drum, into the distillation column, to be brought into contact with the vapor in the distillation column, and to be distilled into a low-boiling component and a high-boiling component. In such a distillation apparatus, as an example, a valve provided between the reflux drum and the distillation column is controlled to be opened and closed in order to control an amount of reflux.

The control target 15 is equipment that is provided in the facility 10 and that is a target of a control. For example, the control target 15 may be an actuator, that is, an operation terminal, such as a valve, a heater, a motor, a fan, a switch, or the like which controls at least one of physical quantities such as an amount, temperature, pressure, a flow rate, speed, and a pH of an object, in a process of the facility 10, and the control target 15 performs a given operation in accordance with a manipulated variable. As an example, a case where the control target 15 is a valve provided between the reflux drum and the distillation column in the distillation apparatus will be described below. However, the present invention is not limited to this. The control target 15 may be a controller that controls the operation terminal. That is, the term "control" which is used in the present specification may be broadly interpreted to include an indirect control of the operation terminal via the controller, in addition to a direct control of the operation terminal.

The facility 10 in which the control target 15 is provided may be provided with one or more sensors capable of measuring various states (the physical quantities) inside and outside the facility 10. As an example, when the facility 10 is the distillation apparatus, the sensors may output process variables PVs (Process Variable) obtained by measuring temperatures at various positions of the distillation apparatus (for example, the top of the column, a center of the column, the bottom of the column, or the like), flow rates in various paths, or the like. State data indicating a state of the facility 10 may include such a process variable PV. The state data may also include a manipulated variable MV (Manipulated Variable) indicating a degree of opening and closing of the valve which is the control target 15. In addition to operation data indicating an operation state as a result of controlling the control target 15 in this way, the state data may include consumption amount data indicating an amount of consumption of energy and raw material in the facility 10, and disturbance environment data or the like indicating the physical quantity that can act as a disturbance on the control of the control target 15.

The distillation apparatus is one of apparatuses which are very widely used in petroleum and chemical processes, which has a feature of a strong mutual interference between the top of the column and the bottom of the column, a long time constant, and a non-linear operation. In such a case where the valve is controlled to be opened and closed by a PID (Proportional Integral Differential) or the like to control the amount of the reflux in the distillation apparatus, it is difficult to enhance controllability. In addition, in a case where a worker manually operates such a valve for the purpose of a plurality of items such as quality assurance, energy saving, GHG (Green House Gas) reduction, and yield enhancement, a degree to which the valve is controlled to be opened and closed largely depended on an experience and an intuition of the worker.

Therefore, in controlling the opening and closing of such a valve, it is conceivable to generate, by the machine learning, an evaluation model that outputs an evaluation index; generate an operation model by reinforcement learning in which the output of the evaluation model is set as at least a part of a reward; and use the operation model to perform the control with Al. For example, the estimation apparatus 400 according to the present embodiment may be applied to the control system 1 that uses, in this way, the plurality of machine learning models, which are different from each other, such as the evaluation model and the operation model.

The simulator 100 simulates an operation in the facility 10. For example, the simulator 100 may be designed based on design information on the facility 10, and executes a behavior obtained by simulating the operation in the facility 10. By acquiring a signal obtained by simulating the manipulated variable for the control target 15, an environment changes, and the simulator 100 outputs simulation data obtained by simulating the state (for example, a prediction value of the sensor) in the facility 10. As an example, the simulator 100 may be composed of a prediction model that predicts a state of the distillation apparatus, and a plant control simulator. The prediction model may be capable of predicting a state change of a reactor from accumulated process data by using modeling technology for time-series data by using deep learning. In addition, the plant control simulator may be capable of virtually simulating a PID control that derives the manipulated variable MV by a difference between a set point variable SV and a controlled variable CV for the control target 15. That is, the simulator 100 may be capable of simulating the behavior itself in the facility 10, in addition to a state prediction value.

The evaluation model management apparatus 200 manages the evaluation model that outputs the evaluation index in accordance with the state of the facility 10. For example, the evaluation model management apparatus 200 may generate the evaluation model by the machine learning, and store the generated evaluation model in its own apparatus. In addition, the evaluation model management apparatus 200 may output the generated evaluation model to the operation model management apparatus 300.

The operation model management apparatus 300 manages the operation model that outputs an action in accordance with the state of the facility 10. For example, the operation model management apparatus 300 may generate the operation model by the reinforcement learning in which the output of the evaluation model that is managed by the evaluation model management apparatus 200, is set as at least a part of the reward, and store the generated operation model in its own apparatus. In addition, the operation model management apparatus 300 may output the generated operation model to the control apparatus 500.

In the control system 1 that uses the plurality of machine learning models, which are different from each other, such as the evaluation model and the operation model, when an abnormality occurs in the facility 10, the estimation apparatus 400 estimates whether the main cause of the abnormality is the evaluation model or the operation model. Then, the estimation apparatus 400 performs an output in accordance with a result of the estimate.

The control apparatus 500 controls the control target 15 by using the operation model. For example, the control apparatus 500 may control the control target 15 in the facility 10 by using the operation model managed by the operation model management apparatus 300.

In this way, in the control system 1, the AI automatically finds a bottleneck (a potential fault) in operation, and generates an index for improvement as the evaluation model. Then, based on the given index, the AI performs trial and error to generate the operation model that provides an instruction for a better operation method. In this manner, with the control system 1, an environment is provided to enable an autonomous control of the facility 10 by using an AI technology. In the control system 1 that uses, in this way, the plurality of machine learning models, which are different from each other, such as the evaluation model and the operation model, when an abnormality occurs in the facility 10, the estimation apparatus 400 according to the present embodiment estimates whether the main cause of the abnormality is the evaluation model or the operation model. Regarding this, the details of each apparatus will be described in order.

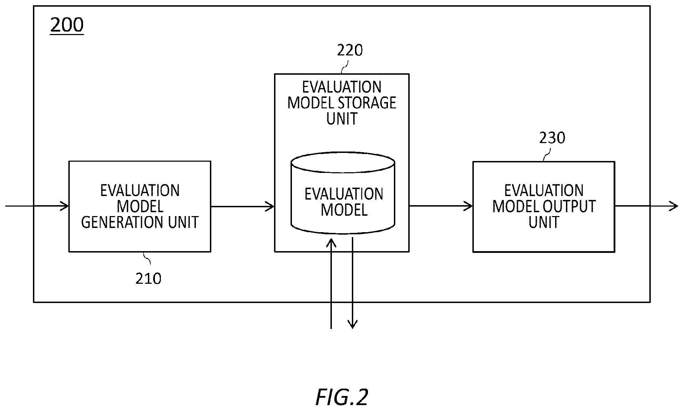

Fig. 2 shows an example of a block diagram of an evaluation model management apparatus 200. The evaluation model management apparatus 200 may be a computer such as a PC (a personal computer), a tablet type computer, a smartphone, a workstation, a server computer, or a general purpose computer, or may be a computer system in which a plurality of computers are connected. Such a computer system is also a computer in a broad sense. In addition, the evaluation model management apparatus 200 may be implemented by one or more virtual computer environments which are able to be run in the computer. Instead of this, the evaluation model management apparatus 200 may be a dedicated computer designed to manage the evaluation model, or may be dedicated hardware realized by dedicated circuitry. In addition, in a case where a connection to the Internet is possible, the evaluation model management apparatus 200 may be realized by cloud computing.

The evaluation model management apparatus 200 includes an evaluation model generation unit 210, an evaluation model storage unit 220, and an evaluation model output unit 230.

The evaluation model generation unit 210 generates the evaluation model that outputs the evaluation index in accordance with the state of the facility 10. For example, the evaluation model generation unit 210 may acquire an operation target (a plant KPI (Key Performance Indicator: key performance evaluation index) or the like) for the facility 10, the state data indicating the state of the facility 10, and a teacher label, and generate labeling data based on these. Then, the evaluation model generation unit 210 may set the generated labeling data as learning data, and generate the evaluation model by an algorithm of the machine learning. Such an evaluation model may be a model in which when the state of the facility 10 is evaluated in comparison with the set operation target, the better the evaluation result is, the greater the value is output as the evaluation index, and the worse the evaluation result is, the smaller the value is output as the evaluation index. For a generation process itself of the evaluation model, any process may be used, and thus a further description will be omitted here. The evaluation model generation unit 210 supplies the generated evaluation model to the evaluation model storage unit 220.

The evaluation model storage unit 220 stores the evaluation model. For example, the evaluation model storage unit 220 may store the evaluation model generated by the evaluation model generation unit 210. It should be noted that the above description has shown, as an example, the case where the evaluation model storage unit 220 stores the evaluation model generated inside the evaluation model management apparatus 200; however, the present invention is not limited to this. The evaluation model storage unit 220 may store the evaluation model generated outside the evaluation model management apparatus 200. The evaluation model storage unit 220 replicates the stored evaluation model and supplies the replicated evaluation model to the evaluation model output unit 230.

The evaluation model output unit 230 outputs the evaluation model. For example, the evaluation model output unit 230 may output the evaluation model replicated by the evaluation model storage unit 220 to the operation model management apparatus 300 via a network.

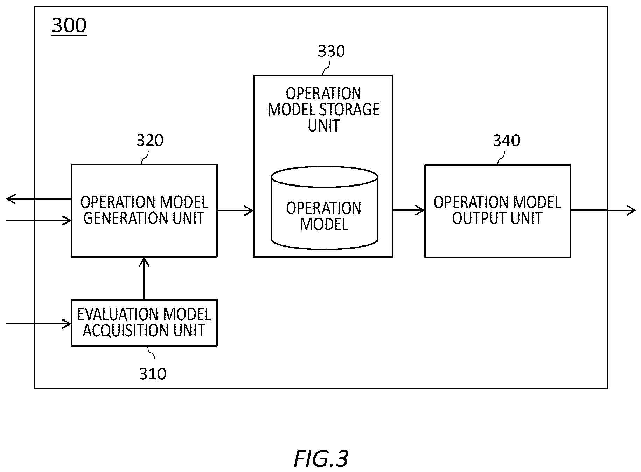

Fig. 3 shows an example of a block diagram of an operation model management apparatus 300. The operation model management apparatus 300 may also be a computer, similarly to the evaluation model management apparatus 200, or may be a computer system in which a plurality of computers are connected. In addition, the operation model management apparatus 300 may be implemented by one or more virtual computer environments which are able to be run in the computer. Instead of this, the operation model management apparatus 300 may be a dedicated computer designed to manage the operation model, or may be dedicated hardware realized by dedicated circuitry. In addition, in a case where a connection to the Internet is possible, the operation model management apparatus 300 may be realized by cloud computing.

The operation model management apparatus 300 includes an evaluation model acquisition unit 310, an operation model generation unit 320, an operation model storage unit 330, and an operation model output unit 340.

The evaluation model acquisition unit 310 acquires the evaluation model that outputs the evaluation index in accordance with the state of the facility 10. For example, the evaluation model acquisition unit 310 may acquire the evaluation model output from the evaluation model output unit 230 via the network. The evaluation model acquisition unit 310 supplies the acquired evaluation model to the operation model generation unit 320.

The operation model generation unit 320 generates the operation model that outputs the action in accordance with the state of the facility 10, by the reinforcement learning in which the output of the evaluation model is set as at least a part of the reward. Such an operation model may have, as an example, a data table that is constituted by a combination (S, A) of S representing a set of pieces of sampled state data and an action A taken under each state; and a weight W calculated by the reward. It should be noted that the output of the evaluation model may be used, as at least part of the reward for calculating such a weight W.

In generating such an operation model, the operation model generation unit 320 may acquire learning environment data indicating a state of a learning environment. At this time, when the simulator 100 that simulates the operation in the facility 10 is used as the learning environment, the operation model generation unit 320 may acquire the simulation data from the simulator 100 as the learning environment data. However, the present invention is not limited to this. The actual facility 10 may be used as the learning environment. In this case, the operation model generation unit 320 may acquire the state data indicating the state of the facility 10 as the learning environment data.

Next, the operation model generation unit 320 may determine the action randomly or by using a known AI algorithm such as FKDPP which will be described below, and give the manipulated variable based on the action to the control target in the learning environment. The state of the learning environment changes according to this.

Then, the operation model generation unit 320 may acquire the learning environment data again. This makes it possible for the operation model generation unit 320 to acquire the state of the learning environment after the change according to the manipulated variable being provided to the control target based on the determined action.

Then, the operation model generation unit 320 may calculate a reward value at least partially based on the output of the evaluation model. As an example, according to the learning environment data indicating the state of the learning environment after the change, being input to the evaluation model, the index which is output by the evaluation model may be calculated as the reward value, as it is.

The operation model generation unit 320 may repeat, multiple times, acquiring processing of the state in accordance with the determination of such an action; then, other than overwriting a value of a weight column in the data table, add new sample data which has not been saved up to this point of time, to a new row in the data table; and update the operation model. The operation model generation unit 320 can generate the operation model by repeating such update processing multiple times. For the generation itself of the operation model, any process may be used, and thus a further description will be omitted here. The operation model generation unit 320 supplies the generated operation model to the operation model storage unit 330.

The operation model storage unit 330 stores the operation model. For example, the operation model storage unit 330 may store the operation model generated by the operation model generation unit 320. It should be noted that the above description has shown, as an example, the case where the operation model storage unit 330 stores the operation model generated inside the operation model management apparatus 300; however, the present invention is not limited to this. The operation model storage unit 330 may store the operation model generated outside the operation model management apparatus 300. The operation model storage unit 330 replicates the stored operation model and supplies the replicated operation model to the operation model output unit 340.

The operation model output unit 340 outputs the operation model. For example, the operation model output unit 340 may output the operation model replicated by the operation model storage unit 330 to the control apparatus 500 via the network.

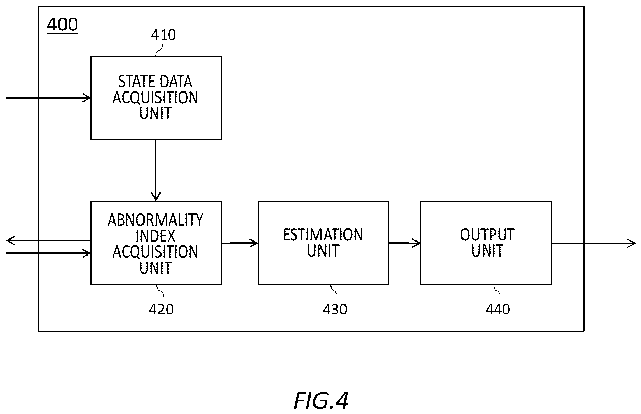

Fig. 4 shows an example of a block diagram of an estimation apparatus 400 according to the present embodiment. The estimation apparatus 400 may also be a computer, similarly to the evaluation model management apparatus 200, or may be a computer system in which a plurality of computers are connected. In addition, the estimation apparatus 400 may be implemented by one or more virtual computer environments which are able to be run in the computer. Instead of this, the estimation apparatus 400 may be a dedicated computer designed to estimate a cause of an abnormality, or may be dedicated hardware realized by dedicated circuitry. In addition, in a case where a connection to the Internet is possible, the estimation apparatus 400 may be realized by cloud computing.

The estimation apparatus 400 includes a state data acquisition unit 410, an abnormality index acquisition unit 420, an estimation unit 430, and an output unit 440.

The state data acquisition unit 410 is configured to acquire the state data indicating the state of the facility 10. Here, the state data is data indicating the state of the facility 10 when the AI control is performed on the control target 15 by using the evaluation model and the operation model. Accordingly, the state data acquisition unit 410 may acquire the state data indicating the state of the facility 10 when the operation model is used to control the control target 15 provided in the facility 10, the operation model being generated by the reinforcement learning in which the output of the evaluation model trained by the machine learning to output the evaluation index in accordance with the state of the facility 10, is set as at least a part of the reward; and outputting the action in accordance with the state of the facility 10. The state data acquisition unit 410 supplies the acquired state data to the abnormality index acquisition unit 420.

The abnormality index acquisition unit 420 acquires an abnormality index. For example, the abnormality index acquisition unit 420 may acquire, as the abnormality index, the evaluation index which is output by the evaluation model according to the state data being input when an abnormality occurs in the facility 10, among pieces of the state data indicating the state of the facility 10 when the operation model is used to control the control target 15 provided in the facility 10, the operation model being generated by the reinforcement learning in which the output of the evaluation model trained by the machine learning to output the evaluation index in accordance with the state of the facility 10, is set as at least a part of the reward; and outputting the action in accordance with the state of the facility 10. The abnormality index acquisition unit 420 supplies the acquired abnormality index to the estimation unit 430.

The estimation unit 430 estimates the main cause of the abnormality. For example, the estimation unit 430 may estimate which of the evaluation model or the operation model is the main cause of the abnormality, based on the abnormality index. The estimation unit 430 supplies the result of the estimate to the output unit 440.

The output unit 440 executes the output. For example, the output unit 440 may execute the output in accordance with the result of the estimate. At this time, the output unit 440 may output the result of the estimate as it is, or may output a message of an instruction to train the evaluation model or the operation model by relearning as described below.

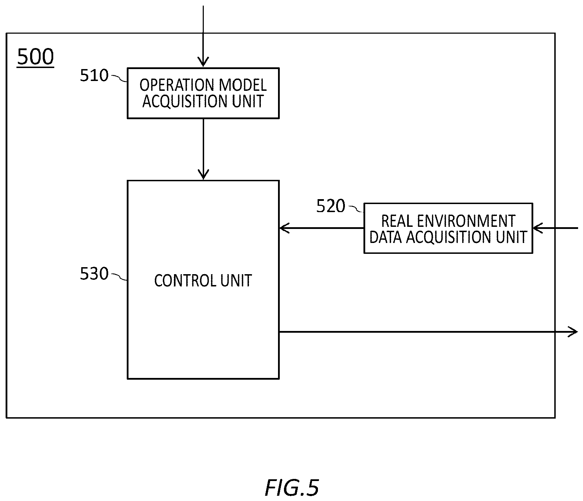

Fig. 5 shows an example of a block diagram of a control apparatus 500. The control apparatus 500 may be, for example, a controller in a DCS (Distributed Control System: distributed control system) or a medium scale instrumentation system, or may be a real time OS controller, or the like.

The control apparatus 500 includes an operation model acquisition unit 510, a real environment data acquisition unit 520, and a control unit 530.

The operation model acquisition unit 510 acquires the operation model. For example, the operation model acquisition unit 510 may acquire the operation model output by the operation model output unit 340 via the network. The operation model acquisition unit 510 supplies the acquired operation model to the control unit 530.

The real environment data acquisition unit 520 acquires real environment data, that is, real environment data indicating the state of the facility 10. Such real environment data may be data similar to the state data indicating the state of the facility 10. The real environment data acquisition unit 520 supplies the acquired real environment data to the control unit 530.

The control unit 530 is configured to control the control target 15 by using the operation model. For example, the control unit 530 may determine the action by a known AI algorithm such as the FKDPP. When such a kernel method is used, the control unit 530 may generate a vector of a state S from a sensor value obtained by the acquired real environment data (the state data). Next, the control unit 530 may generate, as an action determination table, a combination of the state S and all the actions that can be obtained. Then, the control unit 530 may input the action determination table to the operation model. According to this, the operation model may perform a kernel calculation between each row of the action determination table, and each sample data of the data table in which the weight column is excluded, and calculate a distance to each piece of sample data. Next, the operation model may sequentially add a value obtained by multiplying the distance calculated for each sample data, by the value of each weight column, to calculate an expected reward value for each action. Then, the operation model may output the action of which the expected reward value is the highest among all the actions that can be obtained. The control unit 530 may determine the action, for example, by selecting the action output by the operation model in this way.

Then, the control unit 530 may give the control target 15 the manipulated variable obtained by adding the determined action to a current value (for example, a current opening degree of the valve) of the control target 15. For example, in this way, the control unit 530 can perform the AI control on the control target 15 by using the operation model that is managed by the operation model management apparatus 300.

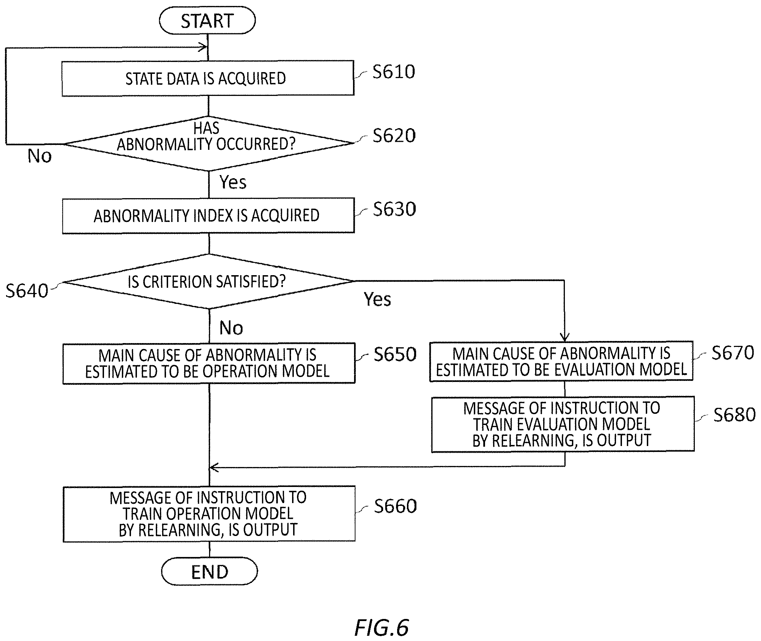

Fig. 6 shows an example of a flow diagram of an estimation method that may be executed by the estimation apparatus 400 according to the present embodiment.

In step S610, the estimation apparatus 400 acquires the state data. For example, the state data acquisition unit 410 may acquire various physical quantities measured by various sensors provided in the facility 10, as the state data, from the facility 10 via the network. However, the present invention is not limited to this. The state data acquisition unit 410 may acquire the state data via means different from the network, or may acquire the state data from another apparatus different from the facility 10.

Here, the state data is data indicating the state of the facility 10 when the AI control is performed on the control target 15 by using the evaluation model and the operation model. Accordingly, the state data acquisition unit 410 may acquire the state data indicating the state of the facility 10 when the operation model is used to control the control target 15 provided in the facility 10, the operation model being generated by the reinforcement learning in which the output of the evaluation model trained by the machine learning to output the evaluation index in accordance with the state of the facility 10, is set as at least a part of the reward; and outputting the action in accordance with the state of the facility 10. The state data acquisition unit 410 supplies the acquired state data to the abnormality index acquisition unit 420.

In step S620, the estimation apparatus 400 determines whether an abnormality has occurred. For example, the estimation apparatus 400 may determine whether a message of a notification that the abnormality has been detected in the facility 10, is provided from the outside (another apparatus or user). If the message of the notification that the abnormality has been detected, is not provided (in a case of No), the estimation apparatus 400 returns processing to step S610 and continues a flow. That is, the estimation apparatus 400 continues the acquiring processing of the state data by the state data acquisition unit 410. On the other hand, if the message of the notification that the abnormality has been detected, is provided (in a case of Yes), the estimation apparatus 400 advances the processing to step S630. That is, the estimation apparatus 400 triggers the acquiring processing of the abnormality index by the abnormality index acquisition unit 420.

In step S630, the estimation apparatus 400 acquires the abnormality index. For example, the abnormality index acquisition unit 420 may identify a time of the occurrence of the abnormality based on the message of the notification that the abnormality has been detected. Next, the abnormality index acquisition unit 420 may extract the state data at the time of the occurrence of the abnormality (for example, measured at the time of the occurrence of the abnormality) from among pieces of the state data acquired in step S610. Then, the abnormality index acquisition unit 420 may supply the state data at the time of the occurrence of the abnormality, to the evaluation model management apparatus 200 via the network. According to this, the evaluation model managed by the evaluation model management apparatus 200 may input the state data at the time of the occurrence of the abnormality, and output the evaluation index. Then, the abnormality index acquisition unit 420 may acquire the evaluation index output by the evaluation model, as the abnormality index, from the evaluation model management apparatus 200 via the network. For example, in this way, the abnormality index acquisition unit 420 may acquire, as the abnormality index, the evaluation index which is output by the evaluation model according to the state data being input when the abnormality occurs in the facility 10, among pieces of the state data indicating the state of the facility 10 when the operation model is used to control the control target 15 provided in the facility 10, the operation model being generated by the reinforcement learning in which the output of the evaluation model trained by the machine learning to output the evaluation index in accordance with the state of the facility 10, is set as at least a part of the reward; and outputting the action in accordance with the state of the facility 10.

It should be noted that the above description has shown, as an example, the case where in acquiring the abnormality index, the estimation apparatus 400 acquires pieces of the state data by itself, extracts the state data at the time of the occurrence of the abnormality from among pieces of the acquired state data, and supplies the state data at the time of the occurrence of the abnormality to the evaluation model management apparatus 200; however, the present invention is not limited to this. Another apparatus may acquire pieces of the state data, extract the state data at the time of the occurrence of the abnormality from among the pieces of the acquired state data, and supply the state data at the time of the occurrence of the abnormality to the evaluation model management apparatus 200. Then, the estimation apparatus 400 may acquire, as the abnormality index, the evaluation index output by the evaluation model according to this. That is, the processing of step S610 and the processing of step S620 may not necessarily be executed by the estimation apparatus 400, and may be executed by another apparatus. In this case, the estimation apparatus 400 may not include the state data acquisition unit 410. The abnormality index acquisition unit 420 supplies the acquired abnormality index to the estimation unit 430.

The estimation unit 430 may estimate which of the evaluation model or the operation model is the main cause of the abnormality, based on the abnormality index acquired in step S630, for example, as follows.

In step S640, the estimation apparatus 400 determines whether the abnormality index satisfies a criterion. For example, the estimation unit 430 may determine whether the abnormality index acquired in step S630 satisfies a predetermined criterion. As an example, the evaluation model is set to be a model in which when the state of the facility 10 is evaluated in comparison with the set operation target, the better the evaluation result is, the greater the value is output as the evaluation index, and the worse the evaluation result is, the smaller the value is output as the evaluation index. In this case, the estimation unit 430 may determine whether the abnormality index is greater than or equal to a predetermined threshold value. Then, if the abnormality index is less than the threshold value, the estimation unit 430 may determine that the abnormality index does not satisfy the criterion (No). In this case, the estimation apparatus 400 advances the processing to step S650.

In step S650, the estimation apparatus 400 estimates that the main cause of the abnormality is the operation model. For example, in this way, when the abnormality index is determined not to satisfy a predetermined criterion in step S640, the estimation unit 430 may estimate that the main cause of the abnormality is the operation model.

Here, the operation model is generated by the reinforcement learning in which the evaluation index that is output by the evaluation model, is set as at least a part of the reward, and outputs the action of which the expected reward value is the highest. Accordingly, when the operation model is generated appropriately, in a case where the state data acquired under the AI control using the operation model is input to the evaluation model, the evaluation index which is output from the evaluation model should be a great value. The fact that nevertheless, the abnormality index, that is, the evaluation index which is output by the evaluation model according to the state data being input at the time of the occurrence of the abnormality, is less than a threshold value, means that there is some problem (insufficiency of the learning data, non-conformity of a learning algorithm, inadequacy of an initial parameter setting, or the like) in the reinforcement learning for generating the operation model and that it is highly probable that the operation model is not appropriately generated. Then, as a result of controlling the control target 15 based on the action output by such an operation model, it can be considered that an abnormality has occurred in the facility 10. Therefore, in such a case, for example, the estimation unit 430 may estimate that the main cause of the abnormality in the facility 10 is the operation model. The estimation unit 430 supplies the result of the estimate to the output unit 440.

In step S660, the estimation apparatus 400 outputs the message of the instruction to train the operation model by the relearning. For example, when the main cause of the abnormality is estimated to be the operation model in step S650, the output unit 440 may output the message of the instruction to train the operation model by the relearning. At this time, the output unit 440 may output the message of the instruction to train the operation model by the relearning, by a display output by a monitor, may output the message of the instruction by an audio output by a speaker, or may output the message of the instruction by a print output by a printer. According to this, the user can instruct the operation model management apparatus 300 to train the operation model by the relearning, and cause the operation model generation unit 320 to generate a new operation model. Instead of or in addition to this, the output unit 440 may output and transmit the message of the instruction to train the operation model by the relearning, to the operation model management apparatus 300. According to this, the operation model generation unit 320 can also automatically (without an intervention of the user) generate a new operation model, by training, as a trigger, the operation model by the relearning.

It should be noted that in training the operation model by the relearning, the operation model generation unit 320 may change at least any of the learning data, the learning algorithm, or the initial parameter, and then train the operation model by the relearning. Accordingly, in outputting the message of the instruction to train the operation model by the relearning, the output unit 440 may output the message of changing at least any of the learning data, the learning algorithm, or the initial parameter, together.

On the other hand, in step S640, if the abnormality index is greater than or equal to the threshold value, the estimation unit 430 may determine that the abnormality index satisfies the criterion (Yes). In this case, the estimation apparatus 400 advances the processing to step S670.

In step S670, the estimation apparatus 400 estimates that the main cause of the abnormality is the evaluation model. For example, in this way, when the abnormality index is determined to satisfy a predetermined criterion in step S640, the estimation unit 430 may estimate that the main cause of the abnormality is the evaluation model.

Here, the evaluation model is a model trained by the machine learning such that when the state of the facility 10 is evaluated, the better the evaluation result is, the greater the value is output as the evaluation index, and the worse the evaluation result is, the smaller the value is output as the evaluation index. Accordingly, the fact that the evaluation index which is output by the evaluation model according to the state data being input, is greater than or equal to a threshold value, means that the evaluation model evaluates the state of the facility 10 to be comparatively good. The fact that nevertheless, an abnormality has occurred in the facility 10, means that there is some problem in the machine learning for generating the evaluation model and that it is highly probable that the evaluation model is not appropriately generated. Then, as a result of performing the AI control on the control target 15, in this way, by using the operation model trained by the reinforcement learning, in which the output of the evaluation model that cannot appropriately evaluate the state of the facility 10, is set as the reward, it can be considered that an abnormality has occurred in the facility 10. Therefore, in such a case, for example, the estimation unit 430 may estimate that the main cause of the abnormality in the facility 10 is the evaluation model. The estimation unit 430 supplies the result of the estimate to the output unit 440.

In step S680, the estimation apparatus 400 outputs the message of the instruction to train the evaluation model by the relearning. For example, the output unit 440 may output the message of the instruction to train the evaluation model by the relearning, when the main cause of the abnormality is estimated to be the evaluation model in step S670. At this time, the output unit 440 may output the message of the instruction to train the evaluation model by the relearning, by the display output by the monitor, may output the message of the instruction by the audio output by the speaker, or may output the message of the instruction by the print output by the printer. According to this, the user can instruct the evaluation model management apparatus 200 to train the evaluation model by the relearning, and cause the evaluation model generation unit 210 to generate a new evaluation model. Instead of or in addition to this, the output unit 440 may output and transmit the message of the instruction to train the evaluation model by the relearning, to the evaluation model management apparatus 200. According to this, the evaluation model generation unit 210 can also automatically (without an intervention of the user) generate a new evaluation model, by training, as a trigger, the evaluation model by the relearning.

It should be noted that in training the evaluation model by the relearning, the evaluation model generation unit 210 may change at least any of the learning data (including the operation target or the teacher label), the learning algorithm, or the initial parameter, and then train the evaluation model by the relearning. Accordingly, in outputting the message of the instruction to train the evaluation model by the relearning, the output unit 440 may output the message of changing at least any of the learning data, the learning algorithm, or the initial parameter, together.

After step S680, the estimation apparatus 400 may advance the processing to step S660. That is, the output unit 440 may output the message of the instruction to train the operation model by the relearning. This also makes it possible for the output unit 440 to output, in the case where the message of the instruction to train the evaluation model by the relearning is output, the message of the instruction to train the operation model by the relearning in which an output of the evaluation model trained by the relearning is set as at least a part of the reward.

A machine learning model is generated by learning the learning data by the machine learning, and outputs an appropriate result according to an input. However, it is not possible to know on what basis (logic) the machine learning model has derived an output result. Such a problem is also called a black box problem. In the related art, when an abnormality occurs in a system that uses the plurality of machine learning models that become black boxes, in this way, it is difficult to clearly determine which machine learning model causes the occurrence of the abnormality.

In contrast to this, the estimation apparatus 400 according to the present embodiment acquires, as the abnormality index, the evaluation index that is output by the evaluation model according to the state data being input at the time of the occurrence of the abnormality. Then, the estimation apparatus 400 according to the present embodiment estimates which of the evaluation model or the operation model is the main cause of the abnormality, based on the abnormality index, and performs the output in accordance with the estimation result. In this manner, with the estimation apparatus 400 according to the present embodiment, even in a case of using a plurality of machine learning models, which are different from each other, such as the evaluation model and the operation model, it is possible to estimate whether the main cause of the abnormality is the evaluation model or the operation model and to make a clear determination.

The estimation apparatus 400 according to the present embodiment may estimate that the main cause of the abnormality is the operation model, when the abnormality index does not satisfy a predetermined criterion. In this manner, with the estimation apparatus 400 according to the present embodiment, it is possible to estimate that it is highly probable that the operation model is the main cause of the abnormality, based on an objective ground. In addition, the estimation apparatus 400 according to the present embodiment may output the message of the instruction to train the operation model by the relearning, when the main cause of the abnormality is estimated to be the operation model. In this manner, with the estimation apparatus 400 according to the present embodiment, it is possible to provide a trigger for training the operation model by the relearning, when it is highly probable that the operation model is the main cause of the abnormality.

The estimation apparatus 400 according to the present embodiment may estimate that the main cause of the abnormality is the evaluation model, when the abnormality index satisfies a predetermined criterion. This makes it possible for the estimation apparatus 400 according to the present embodiment to estimate that it is highly probable that the evaluation model is the main cause of the abnormality, based on an objective ground. In addition, when the main cause of the abnormality is estimated to be the evaluation model, the estimation apparatus 400 according to the present embodiment may output the message of the instruction to train the evaluation model by the relearning. In this manner, with the estimation apparatus 400 according to the present embodiment, it is possible to provide a trigger for training the evaluation model by the relearning, when it is highly probable that the evaluation model is the main cause of the abnormality. In addition, the estimation apparatus 400 according to the present embodiment may output, in the case where the message of the instruction to train the evaluation model by the relearning is output, the message of the instruction to train the operation model by the relearning in which the output of the evaluation model trained by the relearning is set as at least a part of the reward. In this manner, with the estimation apparatus 400 according to the present embodiment, it is possible to provide triggers for training the operation model by relearning, and training the evaluation model by the relearning.

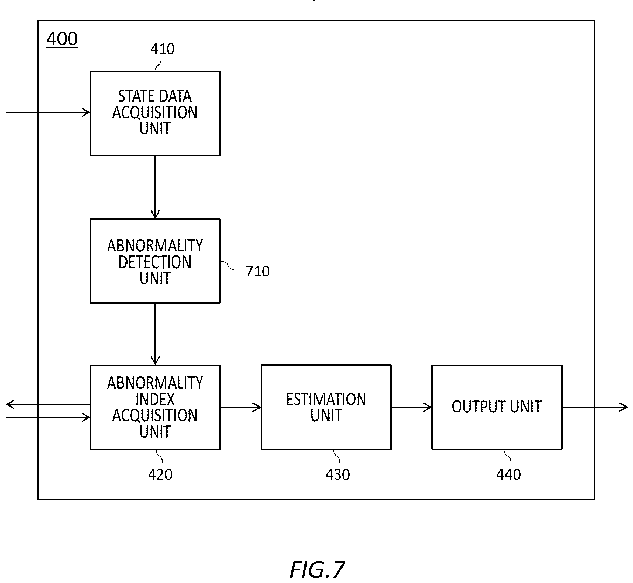

Fig. 7 shows an example of a block diagram of the estimation apparatus 400 according to a first modification example. In Fig. 7, members having the same functions and configurations as those in Fig. 4 are denoted by the same signs and numerals, and the descriptions thereof will be omitted except for the following differences. The embodiment described above shows, as an example, the case where the estimation apparatus 400 determines an abnormality in the facility 10 based on a notification from the outside. However, in the present modification example, the estimation apparatus 400 detects an abnormality in the facility 10 by itself.

The estimation apparatus 400 according to the present modification example may further include an abnormality detection unit 710. In addition, in the estimation apparatus 400 according to the present modification example, the state data acquisition unit 410 may supply the acquired state data to the abnormality detection unit 710 instead of the abnormality index acquisition unit 420.

The abnormality detection unit 710 is configured to detect that an abnormality has occurred in the facility 10 based on the state data. At this time, the abnormality detection unit 710 may detect that the abnormality has occurred in the facility 10 by using a predetermined abnormality detection function, or may detect that the abnormality has occurred in the facility 10 by using an abnormality detection model trained by the machine learning in advance. For an abnormality detection process itself, any process may be used, and thus a further description will be omitted here.

In a case of detecting that an abnormality has occurred in the facility 10 based on the state data, the abnormality detection unit 710 may set the state data leading to the detection of the occurrence of the abnormality, as the state data at the time of the occurrence of the abnormality, and supply the abnormality index acquisition unit 420 with the state data leading to the detection of the occurrence of the abnormality.

In this way, the estimation apparatus 400 according to the present modification example detects by itself that an abnormality has occurred in the facility 10 based on the state data. In this manner, with the estimation apparatus 400 according to the present modification example, it is possible to realize, by a single apparatus, the function of detecting the abnormality and the function of estimating the main cause of the abnormality. Accordingly, with the estimation apparatus 400 according to the present modification example, in the abnormality determination that triggers the acquisition of the abnormality index, it is possible to eliminate a need for the notification from the outside.

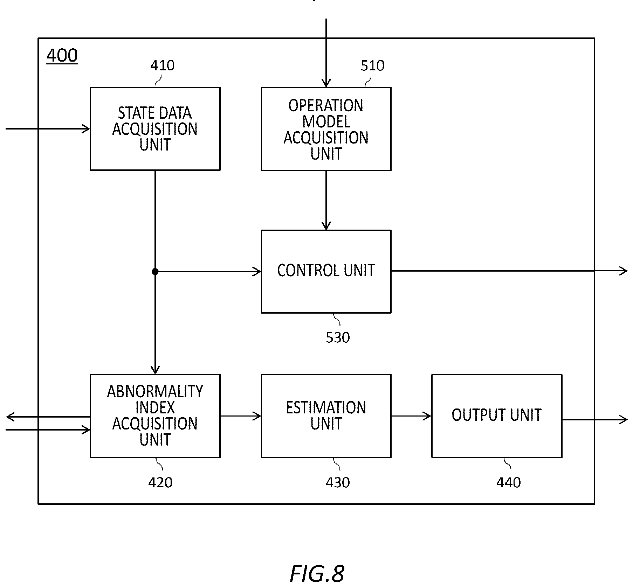

Fig. 8 shows an example of a block diagram of the estimation apparatus 400 according to a second modification example. In Fig. 8, members having the same functions and configurations as those in Fig. 4 are denoted by the same signs and numerals, and the descriptions thereof will be omitted except for the following differences. The embodiment described above has shown, as an example, the case where the evaluation model management apparatus 200, the operation model management apparatus 300, the estimation apparatus 400, and the control apparatus 500 are respectively provided as independent separate apparatuses. However, these apparatuses may be provided as one apparatus in which some or all of them are integrated. In the present modification example, the estimation apparatus 400 provides the function of the control apparatus 500, in addition to the function of the estimation apparatus 400 according to the embodiment described above.

The estimation apparatus 400 according to the present modification example may further include the operation model acquisition unit 510 and the control unit 530. That is, the estimation apparatus 400 according to the present modification example may further include the control unit 530 that controls the control target 15 by using the operation model.

In addition, the state data acquisition unit 410 may supply the acquired state data to the control unit 530 in addition to the abnormality index acquisition unit 420. That is, in the estimation apparatus 400 according to the present modification example, the state data acquisition unit 410 may also function as the real environment data acquisition unit 520. Then, the control unit 530 may control the control target 15 by using the operation model. For example, in this way, The estimation apparatus 400 may also provide the function as the control apparatus 500.

In addition, when the estimation apparatus 400 also provides the function as the control apparatus 500, the output unit 440 may transmit, to the control unit 530, a message to stop the control of the control target 15, according to the message of the instruction being output to train the evaluation model or the operation model by the relearning. This makes it possible for the output unit 440 temporarily stop the control of the control target 15 by the control unit 530.

In this way, the estimation apparatus 400 according to the present modification example can control the control target 15 by using the operation model. In this manner, with the estimation apparatus 400 according to the present modification example, it is possible to realize, by a single apparatus, the function of estimating the main cause of the abnormality and the function of controlling the control target 15.

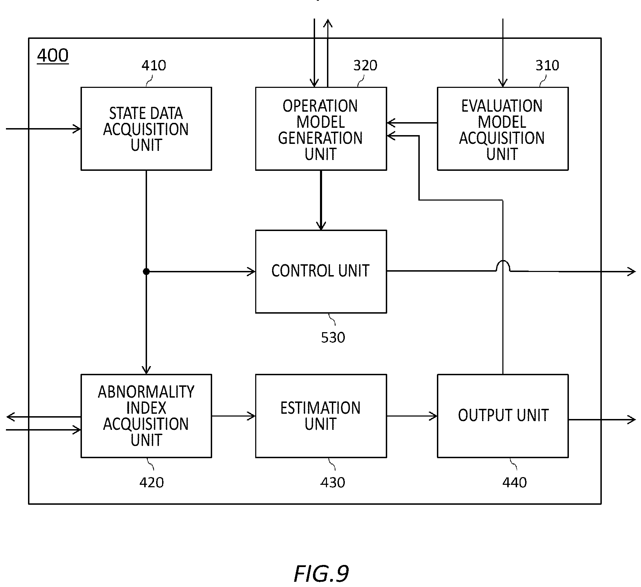

Fig. 9 shows an example of a block diagram of the estimation apparatus 400 according to a third modification example. In Fig. 9, members having the same functions and configurations as those in Fig. 8 are denoted by the same signs and numerals, and the descriptions thereof will be omitted except for the following differences. The second modification example has shown, as an example, the case where the estimation apparatus 400 also provides the function of the control apparatus 500. However, in the present modification example, the estimation apparatus 400 also provides the function of the operation model management apparatus 300 in addition to the function of the control apparatus 500.

The estimation apparatus 400 according to the present modification example may further include the evaluation model acquisition unit 310. In addition, the estimation apparatus 400 according to the present modification example may further include the operation model generation unit 320 instead of the operation model acquisition unit 510. That is, the estimation apparatus 400 according to the present modification example may further include the operation model generation unit 320 configured to generate the operation model by the reinforcement learning. Then, the operation model generation unit 320 may supply the generated operation model to the control unit 530.

In addition, when the estimation apparatus 400 also provides the function of the operation model management apparatus 300, the output unit 440 can also send the message of the instruction to train the operation model by the relearning, to the operation model generation unit 320. According to this, the operation model generation unit 320 can also generate a new operation model.

In this way, the estimation apparatus 400 according to the present modification example can also generate the operation model by the reinforcement learning. In this manner, with the estimation apparatus 400 according to the present modification example, it is possible to realize, by a single apparatus, the function of managing (generating) the operation model, the function of estimating the main cause of the abnormality, and the function of controlling the control target 15. In this manner, with the estimation apparatus 400 according to the present modification example, there is no need to exchange the operation model between the operation model management apparatus 300 and the control apparatus 500, and thus it is possible to reduce a communication cost and time.

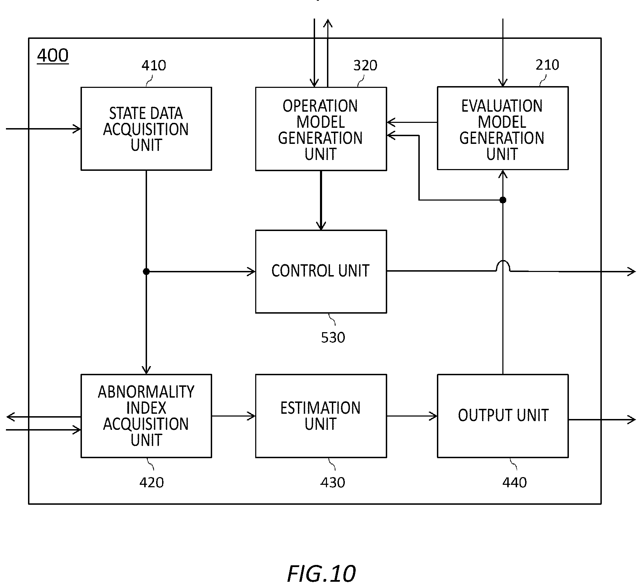

Fig. 10 shows an example of a block diagram of the estimation apparatus 400 according to a fourth modification example. In Fig. 10, members having the same functions and configurations as those in Fig. 9 are denoted by the same signs and numerals, and the descriptions thereof will be omitted except for the following differences. The third modification example has shown, as an example, the case where the estimation apparatus 400 also provides the function of the control apparatus 500 and the operation model management apparatus 300. However, in the present modification example, the estimation apparatus 400 also provides the function of the evaluation model management apparatus 200 in addition to the function of the control apparatus 500 and the operation model management apparatus 300.

The estimation apparatus 400 according to the present modification example may further include the evaluation model generation unit 210 instead of the evaluation model acquisition unit 310. That is, the estimation apparatus 400 according to the present modification example may further include the evaluation model generation unit 210 configured to generate the evaluation model by the machine learning. Then, the evaluation model generation unit 210 may supply the generated evaluation model to the operation model generation unit 320.

In addition, when the estimation apparatus 400 also provides the function of the evaluation model management apparatus 200, the output unit 440 can also send the message of the instruction to train the evaluation model by the relearning, to the evaluation model generation unit 210. According to this, the evaluation model generation unit 210 can also generate a new evaluation model.

In this way, the estimation apparatus 400 according to the present modification example can also generate the evaluation model by the machine learning. In this manner, with the estimation apparatus 400 according to the present modification example, it is possible to realize, by a single apparatus, the function of managing (generating) the evaluation model, the function of managing (generating) the operation model, the function of estimating the main cause of the abnormality, and the function of controlling the control target 15. In this manner, with the estimation apparatus 400 according to the present modification example, there is no need to exchange the evaluation model between the evaluation model management apparatus 200 and the operation model management apparatus 300, and thus it is possible to reduce a communication cost and time. In addition, with the estimation apparatus 400 according to the present modification example, in acquiring the abnormality index, there is no need to exchange the state data or the evaluation index between the evaluation model management apparatus 200 and the estimation apparatus 400, and thus it is possible to reduce a communication cost and time.

Various embodiments of the present invention may be described with reference to flowcharts and block diagrams whose blocks may represent (1) steps of processes in which operations are performed or (2) sections of apparatuses responsible for performing operations. Certain steps and sections may be implemented by dedicated circuitry, programmable circuitry supplied with computer-readable instructions stored on computer-readable media, and/or processors supplied with the computer-readable instructions stored on the computer-readable media. The dedicated circuitry may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element such as a flip-flop, a register, a field programmable gate array (FPGA) and a programmable logic array (PLA), and the like.

A computer-readable medium may include any tangible device that can store instructions to be executed by a suitable device, and as a result, the computer-readable medium having instructions stored thereon includes an article of manufacture including instructions which can be executed to create means for performing operations specified in the flowcharts or block diagrams. Examples of the computer-readable medium may include an electronic storage medium, a magnetic storage medium, an optical storage medium, an electromagnetic storage medium, a semiconductor storage medium, and the like. More specific examples of the computer-readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disc (DVD), a Blu-ray (registered trademark) disc, a memory stick, an integrated circuit card, and the like.

The computer-readable instruction may include an assembler instruction, an instruction-set-architecture (ISA) instruction, a machine instruction, a machine dependent instruction, a microcode, a firmware instruction, state-setting data, or either a source code or an object code written in any combination of one or more programming languages, including an object oriented programming language such as Smalltalk (registered trademark), JAVA (registered trademark), C++, or the like, and a conventional procedural programming language such as a "C" programming language or a similar programming language.

The computer-readable instructions may be provided to a processor of a general purpose computer, special purpose computer, or other programmable data processing apparatuses, or to programmable circuitry, locally or via a local area network (LAN), wide area network (WAN) such as the Internet, or the like, to execute the computer-readable instructions to create means for performing operations specified in the flowcharts or block diagrams. Examples of the processor include a computer processor, a processing unit, a microprocessor, a digital signal processor, a controller, a microcontroller, and the like.

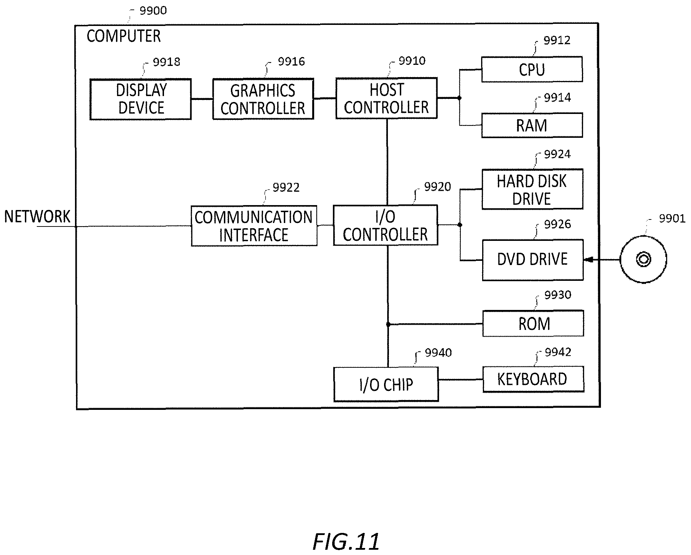

Fig. 11 shows an example of a computer 9900 in which a plurality of aspects of the present invention may be entirely or partially embodied. A program that is installed in the computer 9900 can cause the computer 9900 to function as operations associated with apparatuses according to the embodiments of the present invention or one or more sections of the apparatuses, or can cause the computer 9900 to execute the operations or the one or more sections thereof, and/or can cause the computer 9900 to execute processes according to the embodiments of the present invention or steps of the processes. Such a program may be executed by a CPU 9912 so as to cause the computer 9900 to execute certain operations associated with some or all of the flowcharts and the blocks in the block diagrams described herein.

The computer 9900 according to the present embodiment includes the CPU 9912, a RAM 9914, a graphics controller 9916, and a display device 9918, which are mutually connected by a host controller 9910. The computer 9900 further includes input/output units such as a communication interface 9922, a hard disk drive 9924, a DVD drive 9926, and an IC card drive, which are connected to the host controller 9910 via an input/output controller 9920. The computer also includes legacy input/output units such as a ROM 9930 and a keyboard 9942, which are connected to the input/output controller 9920 via an input/output chip 9940.

The CPU 9912 operates according to programs stored in the ROM 9930 and the RAM 9914, thereby controlling each unit. The graphics controller 9916 acquires image data generated by the CPU 9912 on a frame buffer or the like provided in the RAM 9914 or in itself, to cause the image data to be displayed on the display device 9918.

The communication interface 9922 communicates with other electronic devices via a network. The hard disk drive 9924 stores programs and data that are used by the CPU 9912 within the computer 9900. The DVD drive 9926 reads the programs or the data from a DVD-ROM 9901, to provide the hard disk drive 9924 with the programs or the data via the RAM 9914. The IC card drive reads the programs and the data from an IC card, and/or writes the programs and the data to the IC card.

The ROM 9930 stores therein a boot program or the like executed by the computer 9900 at the time of activation, and/or a program depending on the hardware of the computer 9900. The input/output chip 9940 may also connect various input/output units to the input/output controller 9920, via a parallel port, a serial port, a keyboard port, a mouse port, or the like.

A program is provided by a computer-readable medium such as the DVD-ROM 9901 or the IC card. The program is read from the computer-readable medium, installed into the hard disk drive 9924, the RAM 9914, or the ROM 9930, which are also examples of a computer-readable medium, and executed by CPU 9912. The information processing written in these programs is read into the computer 9900, resulting in cooperation between a program and the above-described various types of hardware resources. An apparatus or a method may be constituted by realizing the operation or processing of information in accordance with the usage of the computer 9900.

For example, when a communication is performed between the computer 9900 and an external device, the CPU 9912 may execute a communication program loaded onto the RAM 9914 to instruct the communication interface 9922 to process the communication, based on the processing written in the communication program. The communication interface 9922, under control of the CPU 9912, reads transmission data stored on a transmission buffer region provided in a recording medium such as the RAM 9914, the hard disk drive 9924, the DVD-ROM 9901, or the IC card, and transmits the read transmission data to a network or writes reception data received from a network to a reception buffer region or the like provided on the recording medium.

In addition, the CPU 9912 may cause all or a necessary portion of a file or a database to be read into the RAM 9914, the file or the database having been stored in an external recording medium such as the hard disk drive 9924, the DVD drive 9926 (the DVD-ROM 9901), the IC card, etc., and perform various types of processing on the data on the RAM 9914. The CPU 9912 then writes back the processed data to the external recording medium.

Various types of information such as various types of programs, data, tables, and databases may be stored in a recording medium and subjected to the information processing. The CPU 9912 may perform various types of processing on the data read from the RAM 9914, which includes various types of operations, information processing, condition judging, conditional branch, unconditional branch, search/replacement of information, etc., as described throughout this disclosure and designated by an instruction sequence of programs, and writes the result back to the RAM 9914. In addition, the CPU 9912 may search for information in a file, a database, etc., in the recording medium. For example, when a plurality of entries, each having an attribute value of a first attribute associated with an attribute value of a second attribute, are stored in the recording medium, the CPU 9912 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The above-described program or software modules may be stored in the computer-readable medium on the computer 9900 or near the computer 9900. In addition, a recording medium such as a hard disk or a RAM provided in a server system connected to a dedicated communication network or the Internet can be used as the computer-readable medium, thereby providing the program to the computer 9900 via the network.

While the present invention has been described with the embodiments, the technical scope of the present invention is not limited to the above-described embodiments. It is apparent to persons skilled in the art that various alterations and improvements can be added to the above-described embodiments. It is also apparent from what is set forth in the claims that embodiments having such alterations or improvements added thereto can be included in the technical scope of the invention.

The operations, procedures, steps, and stages of each process performed by an apparatus, system, program, and method shown in the claims, specification, or drawings can be performed in any order as long as the order is not indicated by "prior to," "before," or the like and as long as the output from a previous process is not used in a later process. Even if the process flow is described using phrases such as "first" or "next" in the claims, specification, or drawings, it does not necessarily mean that the process must be performed in this order.

### EXPLANATION OF REFERENCES

1 control system
10 facility
15 control target
100 simulator
200 evaluation model management apparatus
210 evaluation model generation unit
220 evaluation model storage unit
230 evaluation model output unit
300 operation model management apparatus
310 evaluation model acquisition unit
320 operation model generation unit
330 operation model storage unit
340 operation model output unit
400 estimation apparatus
410 state data acquisition unit
420 abnormality index acquisition unit
430 estimation unit
440 output unit
500 control apparatus
510 operation model acquisition unit
520 real environment data acquisition unit
530 control unit
710 abnormality detection unit
9900 computer
9901 DVD-ROM
9910 host controller
9912 CPU
9914 RAM
9916 graphics controller
9918 display device
9920 input/output controller
9922 communication interface
9924 hard disk drive
9926 DVD drive
9930 ROM
9940 input/output chip
9942 keyboard.

## Claims

1. An estimation apparatus comprising:
an abnormality index acquisition unit configured to acquire, as an abnormality index, an evaluation index which is output by an evaluation model according to state data being input when an abnormality occurs in a facility, among pieces of the state data indicating a state of the facility when an operation model is used to control a control target provided in the facility, the operation model being generated by reinforcement learning in which an output of the evaluation model trained by machine learning to output the evaluation index in accordance with the state of the facility is set as at least a part of a reward, and outputting an action in accordance with the state of the facility;
an estimation unit configured to estimate which of the evaluation model or the operation model is a main cause of the abnormality, based on the abnormality index; and
an output unit configured to execute an output in accordance with a result of the estimate.

2. The estimation apparatus according to claim 1, wherein
the estimation unit is configured to estimate that the main cause of the abnormality is the operation model, when the abnormality index does not satisfy a predetermined criterion.

3. The estimation apparatus according to claim 2, wherein
the output unit is configured to output a message of an instruction to train the operation model by relearning, when the main cause of the abnormality is estimated to be the operation model.

4. The estimation apparatus according to claim 1, wherein
the estimation unit is configured to estimate that the main cause of the abnormality is the evaluation model, when the abnormality index satisfies a predetermined criterion.

5. The estimation apparatus according to claim 4, wherein
the output unit is configured to output a message of an instruction to train the evaluation model by relearning, when the main cause of the abnormality is estimated to be the evaluation model.

6. The estimation apparatus according to claim 5, wherein
the output unit is configured to output, in a case where the message of the instruction to train the evaluation model by the relearning is output, a message of an instruction to train the operation model by relearning in which an output of the evaluation model trained by the relearning is set as at least a part of the reward.

7. The estimation apparatus according to any one of claims 1 to 6, further comprising:
a state data acquisition unit configured to acquire the state data.

8. The estimation apparatus according to claim 7, further comprising:
an abnormality detection unit configured to detect that an abnormality has occurred in the facility, based on the state data.

9. The estimation apparatus according to claim 7, further comprising:
a control unit configured to control the control target by using the operation model.

10. The estimation apparatus according to any one of claims 1 to 6, further comprising:
an operation model generation unit configured to generate the operation model by reinforcement learning.

11. The estimation apparatus according to any one of claims 1 to 6, further comprising:
an evaluation model generation unit configured to generate the evaluation model by machine learning.

12. An estimation method that is executed by a computer, the estimation method comprising: by the computer,
acquiring, as an abnormality index, an evaluation index which is output by an evaluation model according to state data being input when an abnormality occurs in a facility, among pieces of the state data indicating a state of the facility when an operation model is used to control a control target provided in the facility, the operation model being generated by reinforcement learning in which an output of the evaluation model trained by machine learning to output the evaluation index in accordance with the state of the facility, is set as at least a part of a reward, and outputting an action in accordance with the state of the facility;
estimating which of the evaluation model or the operation model is a main cause of the abnormality, based on the abnormality index; and
executing an output in accordance with a result of the estimating.

13. An estimation program that is executed by a computer and that causes the computer to function as:
an abnormality index acquisition unit configured to acquire, as an abnormality index, an evaluation index which is output by an evaluation model according to state data being input when an abnormality occurs in a facility, among pieces of the state data indicating a state of the facility when an operation model is used to control a control target provided in the facility, the operation model being generated by reinforcement learning in which an output of the evaluation model trained by machine learning to output the evaluation index in accordance with the state of the facility, is set as at least a part of a reward, and outputting an action in accordance with the state of the facility;
an estimation unit configured to estimate which of the evaluation model or the operation model is a main cause of the abnormality, based on the abnormality index; and
an output unit configured to execute an output in accordance with a result of the estimate.
